# EUROPÄISCHE PATENTSCHRIFT

(11) **EP 0 584 532 B1**
(45) Veröffentlichungstag und Bekanntmachung des Hinweises auf die Patenterteilung: **01.03.1995**
(21) Anmeldenummer: 93111693.3
(22) Anmeldetag: 21.07.1993
(51) Int. Cl.: A01B 45/02, F01P 11/12

(54) **Motorisch angetriebenes Vertikutiergerät**
Motor driven aerating machine
Appareil pour aérer entrainé par un moteur

(30) Priorität: 24.08.1992 DE 9211347 U
(43) Veröffentlichungstag der Anmeldung: 02.03.1994
(73) Patentinhaber: WOLF-Geräte GmbH Vertriebsgesellschaft KG, D-57518 Betzdorf (DE)
(72) Erfinder: Behner, Hubert, D-57518 Betzdorf (DE)
(74) Vertreter: Koch, Günther, Dipl.-Ing.

(56) Entgegenhaltungen:
- EP-A- 0 159 770
- EP-A- 0 159 770
- AU-D- 759 366
- DE-A- 3 232 895
- MACHINE DESIGN Bd. 42, Nr. 26 , 29. Oktober 1970 , CLEVELAND US Seite 76 'snorkel draws spin-cleaned air'
- PATENT ABSTRACTS OF JAPAN vol. 9, no. 213 (M-408)(1936) 30. August 1985 & JP-A-60 071 332 (ISEKI NIKI K.K.) 23. April 1985

## Beschreibung

Die Erfindung bezieht sich auf ein Vertikutiergerät, dessen Messerwelle durch einen in einem Motorgehäuse untergebrachten Motor angetrieben wird, der außerdem ein Kühlgebläse antreibt, das Kühlluft über den Motor bläst.

Bei den üblichen Vertikutiergeräten (siehe z.B. EP-A-159770), die durch einen Elektromotor angetrieben werden, wird die Kühlluft vom Ventilator von unten her oder durch seitliche Schlitze angesaugt, wodurch erhebliche Mengen von Staub und Schmutzpartikeln, z.B. hochgewirbelte Grasteile, angesaugt und in das Geräteinnere transportiert werden. Diese Verunreinigungen lagern sich um den Antriebsmotor herum ab oder sie verengen den Kühllufteinlaß. In jedem Fall wird die Kühlung des Motors durch Zusetzen des Lufteinlasses im Laufe der Zeit reduziert und, falls keine Reinigung erfolgt, kann das Gerät schließlich durch Überhitzung zerstört werden.

Der Erfindung liegt die Aufgabe zugrunde, das Zusetzen des Kühllufteinlasses zu verhindern und eine dauerhafte ungestörte Kühlung des Antriebsmotors zu gewährleisten.

Gelöst wird die gestellte Aufgabe durch die im Kennzeichnungsteil des Patentanspruchs 1 angegebenen Merkmale. Durch diese 'Schnorchel'-Anordnung des Lufteinlasses wird gewährleistet, daß ständig Frischluft ohne Staub- oder Graspartikel angesaugt wird, so daß der Ansaugkanal ständig frei bleibt. Zweckmäßigerweise wird der Einlaß des Schnorchels dabei auf ein Niveau verlegt, das gegenüber dem zu bearbeitenden Boden so hoch liegt, daß keine aufgewirbelten Fremdkörper mehr zu befürchten sind. Sicherheitshalber ist jedoch im Einlaß ein Filter vorgesehen, welches leicht gereinigt oder ausgewechselt werden kann, falls dennoch unter besonderen Umständen eine Verschmutzung eingetreten ist.

Der biegsam ausgebildete Schnorchel ist zweckmäßigerweise mit seinem Einlaßende am Führungsgriff des Vertikutiergerätes angeklemmt und kann infolge seiner Elastizität der Bewegung des Führungsgriffes folgen. Das Motorgehäuse ist zweckmäßigerweise ringsum abgeschlossen und besitzt lediglich den über den Schnorchel führenden Einlaß und einen Auslaß am stromabseitigen Ende des Motors, wobei dieser Luftstrom noch zur Führung des Vertikutiergutes herangezogen werden kann.

Die Anwendung eines solchen 'Schnorchels' ist nicht auf Vertikutiergeräte beschränkt, sondern kann auch bei anderen Gartengeräten, beispielsweise Rasenmähern, Anwendung finden.

Der Erfindung liegt die Erkenntnis zugrunde, daß eine solche Schnorchelausbildung auch mit Vorteil bei elektromotorisch angetriebenen Gartengeräten verwendbar ist, um eine gleichbleibende Kühlluftströmung zu gewährleisten und nicht nur bei Geräten nützlich ist, die durch eine Brennkraftmaschine angetrieben werden, bei der eine ausreichende Zufuhr sauberer Verbrennungsluft gewährleistet sein muß.

Nachstehend wird ein Ausführungsbeispiel der Erfindung anhand der Zeichnung beschrieben. In der Zeichnung zeigen:
Fig. 1 eine Schnittansicht eines elektromotorisch angetriebenen Vertikutiergerätes mit Schnorchelfilter und abnehmbarem Schwadblech, geschnitten nach der Linie I-I gemäß Fig. 2;
Fig. 2 einen Schnitt nach der Linie II-II gemäß Fig. 1;
Fig. 3 eine Teilansicht des in Fig. 1 dargestellten Vertikutiergerätes mit abgenommenem Schwadblech und geschlossener Heckklappe und verstopften Heckauswurf;
Fig. 4 in größerem Maßstab eine durch den Kreis X in Fig. 1 gekennzeichnete Teilansicht des Vertikutiergerätes;
Fig. 5 eine perspektivische Darstellung des abnehmbaren Schwadbleches;
Fig. 6 eine Teilansicht des in Fig. 1 dargestellten Vertikutiergerätes mit an den Heckauswurf bei geöffneter Heckklappe angesetztem Fangkorb;
Fig. 7 eine Rückansicht des in Fig. 1 dargestellten Vertikutiergerätes mit eingesetztem Schwadblech.

Das in der Zeichnung dargestellte Vertikutiergerät weist ein auf Rädern 12 abgestütztes Chassis 10 auf, das eine parallel zu den Radachsen verlaufende Messerwelle 14 lagert, auf der drehfest die Vertikutiermesser 16 aufgesetzt sind. Das Vertikutiergerät wird an einem Führungsbügel 18 geschoben, der am Chassis 10 über eine Achse 20 schwenkbar angelenkt ist. Die Messerwelle 14 wird von einem Elektromotor 22 angetrieben, der in einem auf dem Chassis sitzenden Gehäuse 24 untergebracht ist und der über einen Keilriemen 26 die Messerwelle 14 antreibt. Auf der dem Keilriemen abgewandten Ende der Motorwelle sitzt ein Ventilator 28, der in das Gehäuseinnere eintretende Luft über den Motor streichen läßt, um diesen zu kühlen. Die Kühlluft tritt durch eine Öffnung 30 in das Gehäuse ein, die mit einem Anschlußstutzen versehen ist, auf den eine Anschlußmuffe 32 aufgesteckt ist, an die ein flexibler Faltenschlauch 34 anschließt, in dessen obere Endmuffe 36 ein pilzförmiges Abschlußstück 38 eingesteckt ist, das mittels einer Federklammer am Führungsbügel 18 festgelegt ist. Infolge der Flexibilität des Faltenschlauches 34 kann dieser der Schwenkbewegung des Führungsbügels folgen. In das pilzförmige Abschlußstück 38 ist ein Filterelement eingesetzt. Über dieses Filterelement saugt der Ventilator in Richtung der Pfeile Frischluft von einer Stelle an, die soweit über dem Boden liegt, daß ein Ansaugen von Pflanzenteilen oder Erdbrocken nicht mehr zu befürchten ist. Im übrigen hält das Filterelement Fremdkörper innerhalb des Abschlußstückes 38 zurück. Der Filter ist leicht zu reinigen oder auszuwechseln, so daß eine ständig gleichbleibende Kühlluftmenge den Motor bestreicht und Überhitzungen verhindert. Der Faltenschlauch 34 mit Abschlußstück 38 und Filterelement bildet demgemäß einen 'Schnorchel', der die Frischluftzuführung gewährleistet.

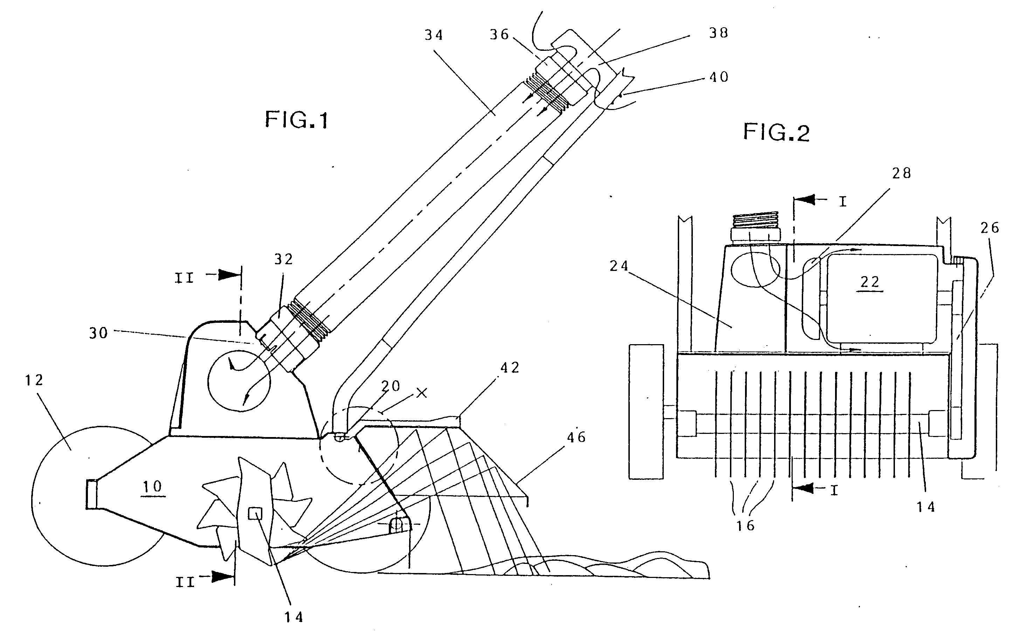

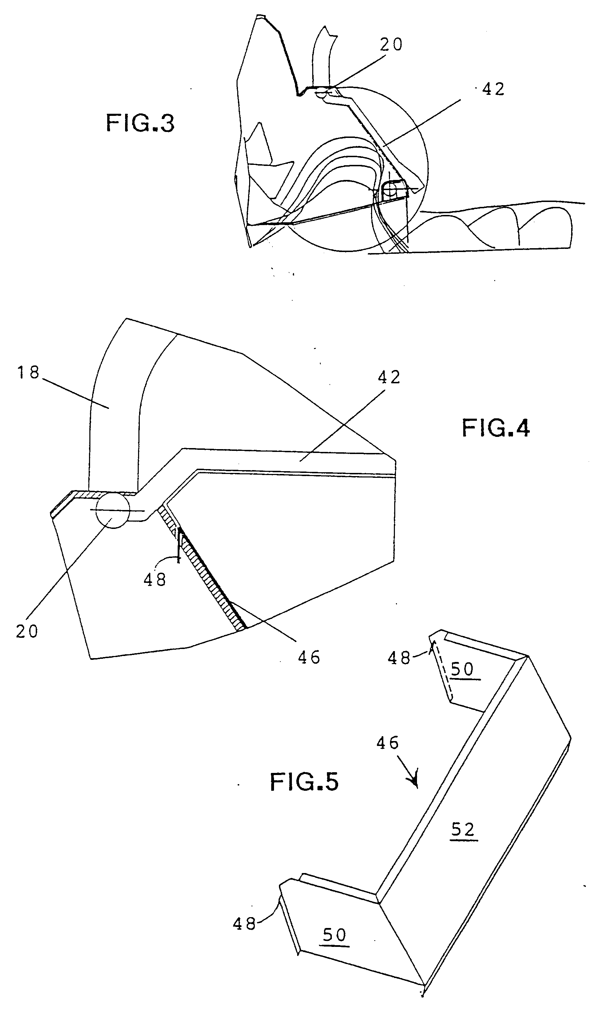

Eine hintere Auswurföffnung des Chassis 10 ist durch eine Heckklappe 42 abschließbar, die um die Anlenkachse 20 des Führungsbügels oder eine parallel hierzu verlaufende Achse schwenkbar ist. In den Figuren 1, 4, 6 und 7 ist die Heckklappe 42 in geöffneter Stellung dargestellt und in Fig. 3 schließt die Heckplatte 42 die hintere Auswurföffnung ab. Infolge hohen Vertikutieranfalls ist, wie ersichtlich, der Heckauswurf verstopft.

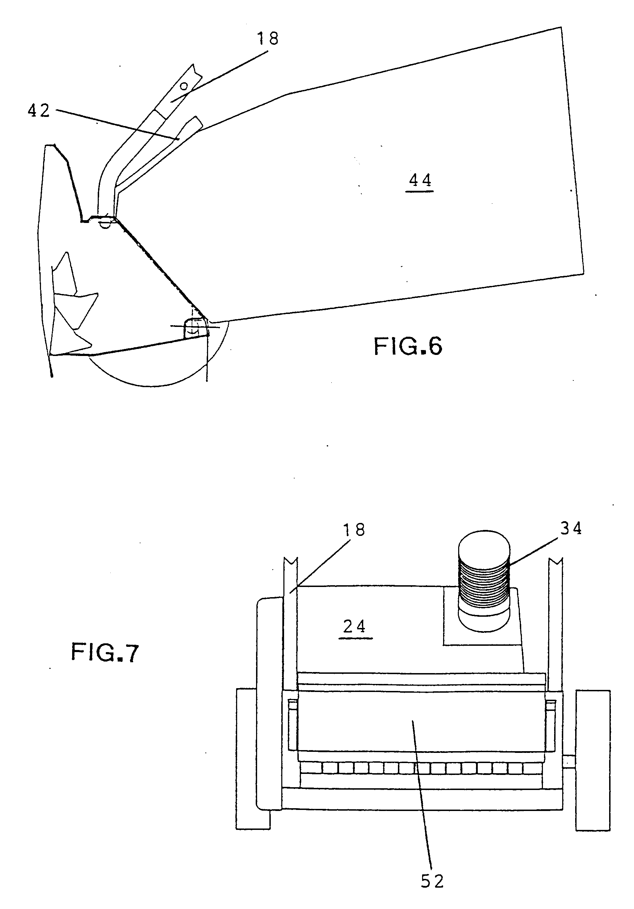

An die hintere Auswurföffnung des Chassis ist bei geöffneter Heckklappe 42 ein Fangkorb 44 einhängbar, in den das Vertikutiergut gefördert wird. Anstelle des Fangkorbes kann bei geöffneter Heckklappe 42 ein Schwadblech 46 eingehängt werden, das in Fig. 5 im Einzelnen und in den Figuren 4 und 7 in Wirkstellung dargestellt ist. Dieses Schwadblech 46 ist mittels zweier Haken 48 am Chassis einhängbar.

Bei geringem Vertikutiergutanfall kann das Vertikutiergerät mit geschlossener Heckklappe 42 gemäß Fig. 3 benutzt werden, wobei das Vertikutiergut gemäß Fig. 3 nach unten abgelegt wird, und durch die Heckklappe 42 wird ein Schutz gegen Steinschlag gewährleistet.

Bei stärkerem Vertikutiergutanfall kann durch das Vertikutiergut der Raum im Chassis hinter den Vertikutiermessern verstopft werden. In diesem Fall empfiehlt sich die Einhängung des Schwadbleches 46, welches den Auswurf durch seine beiden seitlichen Flansche 50 und das hintere Abschlußblech 52 mit einem erweiterten Auswurfraum abschließt. Der obere Abschluß erfolgt durch die Heckklappe 42. Auf diese Weise wird auch bei eingehängtem Schwadblech eine Steinschlagsicherheit gewährleistet. Durch diese vergrößerte Auswurföffnung und durch die Umlenkwirkung des Schwadbleches wird das Vertikutiergut störungsfrei ausgeworfen und sauber abgelegt.

Anstelle des Schwadbleches 46 kann der Fangkorb 44 gemäß Fig. 6, ähnlich wie bei einem Rasenmäher, eingehängt werden.

Durch die leichte Montage des Schwadbleches oder des Fangkorbes kann das Vertikutiergerät vom Benutzer mit nur wenigen Handgriffen umgerüstet werden.

In jeder Stellung, gleichgültig ob bei geschlossener Heckklappe, mit angesetztem Schwadblech oder angesetztem Fangkorb, wird das Vertikutiergut daran gehindert in wesentlichem Umfange nach oben auszutreten. Es wird entweder auf dem Boden abgelegt oder in den Fangkorb gefördert, so daß keine Gefahr besteht, daß es in die Kühllufteinlaßöffnung gelangt.

## Patentansprüche

1. Vertikutiergerät mit einem am Chassis (10) angelenkten Führungsbügel (18) und mit einer Messerwelle (14), die durch einen in einem Motorgehäuse (24) untergebrachten Motor (22) angetrieben wird, der außerdem ein Kühlgebläse (28) antreibt, das Kühlluft über eine Luftansaugöffnung (30) im Motorgehäuse (24) ansaugt und über den Motor bläst, dadurch gekennzeichnet, daß an die Luftansaugöffnung (30) des Motorgehäuses (24) eine Ansaugleitung (34) angeschlossen ist, deren Einlaß (38) an einer Stelle am Führungsbügel (18) des Vertikutiergerätes, die im wesentlichen frei ist von aufgewirbelten Staub- und Vertikutierteilen, angeordnet ist.

2. Vertikutiergerät nach Anspruch 1,
dadurch gekennzeichnet, daß die Ansaugleitung aus einem Faltenschlauch (34) besteht, dessen Einlaßende am Führungsgriff (18) anklemmbar (40) ist.

3. Vertikutiergerät nach den Ansprüchen 1 und 2,
dadurch gekennzeichnet, daß das Ansaugstück (38) des Faltenschlauches (34) pilzförmig ausgebildet ist und einen auswechselbaren Filter enthält.

4. Vertikutiergerät nach den Ansprüchen 1 bis 3,
dadurch gekennzeichnet, daß der Faltenschlauch (34) mit seiner Anschlußmuffe (32) auf einen Anschlußstutzen an der Einlaßöffnung des Motorgehäuses (24) aufsteckbar ist.

5. Vertikutiergerät nach einem der Ansprüche 1 bis 4,
dadurch gekennzeichnet, daß das Motorgehäuse (24) dicht geschlossen ist und lediglich über die Ansaugöffnung (30) und eine Ausblasöffnung mit der Umgebungsluft in Verbindung steht.

6. Vertikutiergerät nach Anspruch 5,
dadurch gekennzeichnet, daß der Kühlluftauslaß des Gehäuses (24) eine Richtwirkung auf das ausgehobene Vertikutiergut ausübt.

## Claims

1. Aerating machine comprising a guide handle (18) pivotally mounted to the chassis (10) of the machine and a blade driving shaft (14) driven by a motor (22) mounted in a motor casing (24), said motor further driving a cooling air blower (28) drawing off cooling air from a suction inlet (30) within the motor casing (24) and blowing the air across the motor
characterized in that a suction line (34) is connected to the suction inlet (30) of the motor casing (24) wherein the feeding end (38) of the suction line is connected to the guide handle (18) of the machine at a position substantially free from dust particles and aerated particles raised during operation.

2. Aerating machine in accordance with claim 1,
characterized in that the suction line comprises a corrugated tube (34) the feeding end whereof can be clamped (40) to the guide handle (18).

3. Aerating machine in accordance with claims 1 and 2,
characterized in that the feeding end (38) of the corrugated tube (34) is mushroom shaped and comprises an exchangably mounted filter.

4. Aerating machine in accordance with claims 1 - 3,
characterized in that the connecting sleeve (32) of the corrugated tube (34) can be mounted to a connecting socket at the inlet opening of the motor casing.

5. Aerating machine in accordance with claims 1 - 4,
characterized in that the motor casing (24) is hermetically sealed and is connected to the ambient air by its suction opening (30) and its exhaust opening only.

6. Aerating machine in accordance with claim 5,
characterized in that the cooling air outlet of the casing (24) is operative to exert a directional affect upon the aerated material.

## Revendications

1. Scarificateur comprenant un guidon (18) fixé de manière articulée sur le châssis (10) et un arbre porte-couteaux (14) qui est entraîné par un moteur (22) logé dans un carter de moteur (24), lequel entraîne également un ventilateur de refroidissement (28) qui aspire de l'air de refroidissement dans le carter du moteur (24) par le biais d'une ouverture d'aspiration d'air (30) et qui le souffle sur le moteur, caractérisé en ce qu'une conduite d'aspiration (34) est raccordée à l'ouverture d'aspiration d'air (30) du carter du moteur (24), conduite dont l'entrée est disposée à un endroit du guidon (18) du scarificateur (2) qui est pour l'essentiel exempt de poussières et de projections de scarifiage soulevées en tourbillons.

2. Scarificateur selon la revendication 1, caractérisé en, ce que la conduite d'aspiration est composée d'un tuyau souple à soufflets (34) dont l'extrémité d'entrée peut être encliquetée (40) sur le guidon (18).

3. Scarificateur selon les revendications 1 et 2, caractérisé en ce que l'embout d'aspiration (38) du tuyau souple à soufflets (34) est réalisé en forme de champignon et contient un filtre remplaçable.

4. Scarificateur selon les revendications 1 à 3, caractérisé en ce que le tuyau souple à soufflets (34) peut être enfoncé à l'aide de son manchon de raccordement (32) sur une tubulure de raccordement à l'ouverture d'entrée du carter du moteur (24).

5. Scarificateur selon l'une des revendications 1 à 4, caractérisé en ce que le carter du moteur (24) est hermétiquement fermé et n'est en contact avec l'air ambiant que par le biais d'une ouverture d'aspiration (30) et d'une ouverture de sortie.

6. Scarificateur selon la revendication 5, caractérisé en ce que la sortie d'air de refroidissement du carter (24) dirige la matière soulevée par le scarificateur.
